# EUROPÄISCHE PATENTSCHRIFT

(11) **EP 1 075 681 B1**
(45) Veröffentlichungstag und Bekanntmachung des Hinweises auf die Patenterteilung: **03.03.2004**
(21) Anmeldenummer: 99920799.6
(22) Anmeldetag: 27.04.1999
(51) Int. Cl.: G07F 7/10

(54) **VERFAHREN UND ANORDNUNG ZUR VERHINDERUNG DER MISSBRÄUCHLICHEN VERWENDUNG DER AUF EINEM CHIPKARTEN-INTERFACE VORHANDENEN AUTHENTIFIZIERUNGSPROZEDUREN**
METHOD AND ARRANGEMENT FOR AVOIDING MISUSE OF AUTHENTICATION PROCEDURES AVAILABLE ON A CHIP CARD INTERFACE
PROCEDE ET SYSTEME POUR EMPECHER UNE UTILISATION FRAUDULEUSE DES PROCEDURES D'AUTHENTIFICATION PRESENTES SUR L'INTERFACE DE CARTES A PUCES

(30) Priorität: 27.04.1998 DE 19818830
(43) Veröffentlichungstag der Anmeldung: 14.02.2001
(73) Patentinhaber: T-Mobile Deutschland GmbH, 53227 Bonn (DE)
(72) Erfinder: LJUNGSTROEM, Patrik, D-53639 Königswinter (DE); MICHEL, Uwe, D-53604 Bad Honnef (DE)
(74) Vertreter: Riebling, Günter, Dr.
(86) Internationale Anmeldenummer: PCT/EP1999/002845
(87) Internationale Veröffentlichungsnummer: WO 1999/056253

(56) Entgegenhaltungen:
- EP-A- 0 157 303
- EP-A- 0 626 662
- EP-A- 0 789 335
- DE-A- 3 148 396
- US-A- 5 594 227

## Beschreibung

Die vorliegende Erfindung betrifft ein Verfahren zur Verhinderung von Mißbrauch von Chipkarten, wie sie in vielen Anwendungen (wie z.B. Bankenbereich, Mobiltelefonie, Sicherheitssystemen usw. ) zur Anwendung kommen. Kernpunkt ist dabei, daß ein Authentifizierungsverfahren einen in der Karte sicher abgelegten Schlüssel benutzt, um die Identität der Karte eindeutig zu erkennen.

Mit Verbesserung der Computertechnik ist die Wahrscheinlichkeit gewachsen, daß bei mißbräuchlichem Vorgehen unter Zuhilfenahme statistischer Methoden eine Ermittlung des internen Schlüssels in der Karte nicht mehr gänzlich auszuschließen ist.

Die EP-A-0 626 662 offenbart ein Verfahren und eine Vorrichtung zur Verhinderung der mißbräuchlichen Verwendung für eine Chipkarte vorhandenen Authentifizierungsprozeduren, wobei die Anzahl ausgeführter Authentifizierungsprozeduren erfaßt wird und bei Erreichen eines Grenzwertes weitere Prozeduren angestoßen werden, die als Endziel die Verhinderung der weitere Verwendung der Chipkarte beinhalten. Die Chipkarte stellt eine bestimmte Anzahl von Operationen oder Vorgängen zur Verfügung und läßt maximal die selbe Anzahl von Authentisierungsprozeduren zu.

Die DE-A-31 48 396 betrifft eine Feststellungsvorrichtung zur Verwendung in einer Transaktionsvorrichtung, durch welche ein Mißbrauch der Transaktionsvorrichtung verhindert werden soll. Dazu ist vorgesehen, daß die Transaktionsvorrichtung gesperrt wird, falls eine vorgegebene Anzahl von Fehleingaben eines Identifikationscodes stattgefunden hat. Ferner wird eine Identifikationscode-Eingabe dann als gültig angesehen, wenn im Falle von vorausgegangenen Fehleingaben in einer bestimmten Anzahl der korrekte Identifikationscode nach Ablauf einer bestimmten Zeitdauer innerhalb einer vorgegeben Anzahl von Eingaben eingegeben wird.

Aufgabe der vorliegenden Erfindung ist es, ein Verfahren und eine Anordnung zur Verhinderung der mißbräuchlichen Verwendung der auf einem Chipkarten-Interface vorhandenen Authentifizierungsprozeduren anzugeben, welche es einfach und kostengünstig erlauben, einen Mißbrauch zu verhindern oder zumindest schwieriger zu gestalten.

Eine Lösung der oben genannten Aufgabe wird durch die Erfindung erreicht, wie sie in den Merkmalen der Patentansprüche angegeben ist.

Vorteil der Erfindung ist, daß bei Verwendung der Erfindung die Nutzung einer solchen Karte durch den rechtmäßigen Nutzer keiner Einschränkung unterliegt, der Mißbrauchsfall jedoch sicher unterbunden werden kann und die Kosten für den Zusatzaufwand sich in vertretbaren Grenzen halten.

Die Beschreibung einer Implementierung der Erfindungsidee ist nachfolgend aufgeführt.

Mit Hilfe des nachfolgend dargestellten Verfahrens soll sichergestellt werden, daß die auf einem Chipkarten-Interface vorhandenen Authentifizierungs-Prozeduren (Input/Output-Kommandos) nur so häufig benutzt werden können, wie diese normalerweise zur Anwendung kommen. Eine über dieses Maß hinausgehende, häufigere Verwendung der Prozeduren wird als Mißbrauch der Chipkarte interpretiert. Auf diesen Mißbrauchfall soll dann in geeigneter Weise reagiert werden.

### 1. Erkennen der übermäßigen Nutzung der Authentifizierungsprozeduren

Das Erkennen einer über die Normalhäufigkeit hinausgehenden Nutzung der Authentifizierungsprozeduren kann durch die beiden folgenden Verfahren sichergestellt werden:

### 1.1 Absolute Nutzungshäufigkeit

Innerhalb der Chipkarte wird mitgezählt, wie häufig die Authentifizierungsprozedur ausgeführt wird. Überschreitet der Zähler einen bestimmten Grenzwert (in Abhängigkeit der jeweiligen Applikation), so ist der Mißbrauchsfall erkannt.

### 1.2 Relative Nutzungshäufigkeit pro Zeitintervall

Hierbei wird immer dann von einem Mißbrauchsfall ausgegangen, wenn innerhalb einer bestimmten Zeiteinheit mehr Authentifizierungsprozeduren ausgeführt werden, als dies für die Normalanwendung erforderlich wäre. Um die relative Nutzungshäufigkeit festzustellen wird ein Zeitmaß innerhalb der Chipkarte benötigt. Dieses Zeitmaß wird aus einem der Chipkarte extern zugeleiteten oder intern erzeugten Taktsignal abgeleitet. Durch entsprechende Teilung des Taktes (T) und Inkrementierung eines Zählers (Zeitzähler Z) gewinnt man ein Zeitmaß, welches sich kontinuierlich erhöht, sofern sich die Karte in Betrieb befindet (d.h. aktiv ist). Das zur Bestimmung der relativen Nutzungshäufigkeit zu betrachtende Zeitintervall (I) ist ein festgelegter Wert zwischen zwei Zeit-Zählerständen Z1 und Z2. Bei Erreichen des Zählerstandes Z1 wird ein weiterer Zähler (Authentifizierungszähler A) zur Bestimmung der Anzahl ausgeführter Authentifizierungsprozeduren zurückgesetzt. Im Zeitintervall I wird der Zähler A mit jedem Authentifizierungsvorgang um 1 erhöht. Beim Erreichen des Zählerstandes Z2 wird der aktuelle Zählerstand A gespeichert und mit dem Intervall I in Beziehung gesetzt. Ist die Rate (R=A/I) größer als ein festgelegter Grenzwert Rmax, so gilt der Mißbrauchfall als erkannt.

### 2. Folgen nach der Erkennung des Mißbrauchsfalls

Gilt ein potentieller Mißbrauchsfall als erkannt, so kann hierauf unterschiedlich reagiert werden:

### 2.1 Sperren der Chipkarte

Die Chipkarte wird gesperrt, d.h. bestimmte Prozeduren (insbesondere die Authentifizierungsprozeduren) auf dem Chipkarten-Interface sind irreversibel nicht mehr ausführbar. Lediglich der gesperrte Status und dessen Grund sind auf dem Chipkarten-Interface auszulesen.

### 2.2 Sperren der Chipkarte mit Entsperrmöglichkeit

Die Chipkarte wird gesperrt, kann jedoch mittels einer geeigneten Schlüssels (Personal Unblocking Key / ggf. in Verbindung mit kryptographischen Verfahren auch ferngesteuert) und diesbezüglicher noch ausführbarer Prozeduren auf dem Chipkarten-Interface entsperrt werden.

## Patentansprüche

1. Verfahren zur Verhinderung der mißbräuchlichen Verwendung der auf einem Chipkarten-Interface vorhandenen Authentifizierungsprozeduren, wobei die Anzahl ausgeführter Authentifizierungsprozeduren erfaßt wird und bei Erreichen eines Grenzwertes weitere Prozeduren angestoßen werden, die als Endziel die Verhinderung der weiteren Verwendung der Chipkarte beinhalten,
**dadurch gekennzeichnet,**
**daß** Maßnahmen getroffen werden, die bewirken, daß in einem bestimmten Zeitintervall I nur eine beschränkte Anzahl von Authentifizierungsprozeduren über das Interface ausgeführt werden kann, wobei das Zeitintervall I als Wert zwischen zwei Zählerständen definiert wird.

2. Verfahren nach Anspruch 1, **dadurch gekennzeichnet, daß** aus einem der Chipkarte extern zugeleiteten oder intern erzeugten Taktsignal unter Verwendung eines Zählers Z ein Zeitmaß abgeleitet wird, welches sich kontinuierlich erhöht, sofern sich die Karte in Betrieb befindet,
daß zur Bestimmung einer relativen Nutzungshäufigkeit das Zeitintervall I als festgelegter Wert zwischen zwei Zeit-Zählerständen Z1 und Z2 definiert wird,
daß bei Erreichen des Zählerstandes Z1 ein Zähler A zur Bestimmung der Anzahl ausgeführter
Authentifizierungsprozeduren zurückgesetzt wird,
daß im Zeitintervall I der Zähler A mit jedem Authentifizierungsvorgang um 1 erhöht wird,
daß bei Erreichen des Zählerstandes Z2 der aktuelle Zählerstand A gespeichert und mit dem Intervall I in Beziehung gesetzt wird, und
daß bei einer Rate R= A/I, die größer als ein festgelegter Grenzwert Rmax ist, ein Mißbrauchsfall als erkannt gilt.

3. Verfahren nach Anspruch 1, **dadurch gekennzeichnet, daß** die Anzahl der ausgeführten Authentifizierungsprozeduren erfaßt wird und bei Erreichen eines anzahlmäßigen Grenzwertes die weitere Prozeduren eingeleitet werden.

4. Chipkarte zur Durchführung des Verfahrens nach den Ansprüchen 1 bis 3, zur Verhinderung der mißbräuchlichen Verwendung einer auf einem Chipkarten-Interface vorhandenen Authentifizierungsprozedur, wobei auf der Chipkarte mindestens eine Einheit angeordnet ist, die die absolute Anzahl der durchgeführten Authentifizierungen nach oben begrenzt,
**dadurch gekennzeichnet,**
**daß** auf der Chipkarte mindestens eine Einheit angeordnet ist, die bewirkt, daß in einem bestimmten Zeitintervall I nur eine beschränkte Anzahl von Authentifizierungsprozeduren über das Interface ausgeführt werden kann, wobei das Zeitintervall I als Wert zwischen zwei Zählerständen definiert wird.

5. Chipckarte nach Anspruch 4, **dadurch gekennzeichnet, daß** auf der Chipkarte mindestens eine Einheit, sei es als einzelne Einheit, sei es als Untereinheit der Einheit gemäß Anspruch 3, angeordnet ist, die die absolute Anzahl der durchgeführten Authentifizierungsprozeduren erfaßt und mittels Vergleich mit einem Grenzwert die Anzahl der ausführbaren Authentifizierungen nach oben begrenzt.

## Claims

1. Method for preventing the improper use of the authentication procedures available on a chip card interface, wherein the number of authentication procedures carried out is recorded and on reaching a limiting value other procedures are launched comprising as their ultimate objective the prevention of further use of the chip card, **characterised in that**
measures are taken which have the effect that in a certain time interval I only a limited number of authentication procedures can be carried out via the interface, wherein the time interval I is defined as a value between two counter states.

2. Method according to Claim 1, **characterised in that** from a clock signal fed to the chip card from the outside or generated internally using a counter Z a time measure is derived which increases continuously as long as the card is in operation, that for determining a relative usage frequency the time interval I is defined as a fixed value between two time counter states Z1 and Z2, that on reaching the counter state Z1 a counter A is reset for determining the number of authentication procedures carried out, that in the time interval I the counter A is increased by 1 for each authentication operation, that on reaching the counter state Z2 the current counter state A is stored and related to the interval I and that for a rate R = A/I which is greater than a fixed limiting value Rmax a case of improper use is taken as having been detected.

3. Method according to Claim 1, **characterised in that** the number of authentication procedures carried out is recorded and on reaching a numerical limiting value the other procedures are initiated.

4. Chip card for carrying out the method according to Claims 1 to 3 for preventing the improper use of an authentication procedure available on a chip card interface, wherein arranged on the chip card is at least one unit which applies an upper limit to the absolute number of authentications carried out, **characterised in that** arranged on the chip card is at least one unit which has the effect that in a certain time interval I only a limited number of authentication procedures can be carried out via the interface, wherein the time interval I is defined as a value between two counter states.

5. Chip card according to Claim 4, **characterised in that** arranged on the chip card is at least one unit, either in the form of a single unit or in the form of a subunit of the unit according to Claim 3, which records the absolute number of authentication procedures and by comparison with a limiting value applies an upper limit to the number of executable authentications.

## Revendications

1. Procédé pour empêcher l'utilisation abusive des procédures d'authentification prévues sur une interface de carte à puce, selon lequel on enregistre le nombre de procédures d'authentification exécutées, et lorsqu'une valeur limite est atteinte, on déclenche d'autres procédures dont l'objectif final est d'empêcher la poursuite de l'utilisation de la carte à puce,
**caractérisé en ce qu'**on prend des mesures qui ont pour effet de ne permettre pendant un intervalle de temps I défini qu'un nombre limité de procédures d'authentification par l'intermédiaire de l'interface, l'intervalle de temps I étant défini comme valeur entre deux positions de compteur.

2. Procédé selon la revendication 1,
**caractérisé en ce qu'**à partir d'un signal d'horloge transmis de l'extérieur à la carte à puce ou généré à l'intérieur, on dérive en utilisant un compteur Z une cadence qui augmente continuellement tant que la carte est en fonctionnement,
**en ce que** pour déterminer une fréquence d'utilisation relative, l'intervalle de temps I est défini comme valeur fixée entre deux positions de compteur horaire Z1 et Z2,
**en ce que** lorsque la position de compteur Z1 est atteinte, un compteur A est remis à zéro pour déterminer le nombre de procédures d'authentification exécutées,
**en ce que** pendant l'intervalle de temps I, le compteur A est augmenté de 1 à chaque authentification,
**en ce que** lorsque la position de compteur Z2 est atteinte, la position de compteur A actuelle est mise en mémoire et mise en relation avec l'intervalle I, et
**en ce qu'**avec un rapport R=A/I supérieur à une valeur limite fixée Rmax, on considère qu'il y a un cas d'utilisation abusive.

3. Procédé selon la revendication 1, **caractérisé en ce qu'**on enregistre le nombre de procédures d'authentification exécutées et lorsqu'un nombre limite est atteint, les autres procédures sont déclenchées.

4. Carte à puce pour mettre en oeuvre le procédé selon les revendications 1 à 3 pour empêcher l'utilisation abusive d'une procédure d'authentification prévue sur une interface de carte, étant précisé qu'il est prévu sur la carte à puce au moins une unité qui limite vers le haut le nombre absolu d'authentifications exécutées,
**caractérisée en ce qu'**il est prévu sur la carte à puce au moins une unité qui a pour effet de ne permettre pendant un intervalle de temps I défini qu'un nombre limité de procédures d'authentification par l'intermédiaire de l'interface, l'intervalle de temps I étant défini comme valeur entre deux positions de compteur.

5. Carte à puce selon la revendication 4,
**caractérisé en ce qu'**il est prévu sur la carte à puce au moins une unité, que ce soit une unité individuelle ou une sous-unité de l'unité selon la revendication 3, qui enregistre le nombre absolu de procédures exécutées et, grâce à une comparaison avec une valeur limite, limite vers le haut le nombre d'authentifications pouvant être exécutées.
